# EUROPÄISCHE PATENTSCHRIFT

(11) **EP 1 219 071 B1**
(45) Veröffentlichungstag und Bekanntmachung des Hinweises auf die Patenterteilung: **14.11.2007**
(21) Anmeldenummer: 00960629.4
(22) Anmeldetag: 08.09.2000
(51) Int. Cl.: H04L 12/403

(54) **BETRIEBSVERFAHREN FÜR EINEN DATENBUS FÜR MEHRERE TEILNEHMER MIT FLEXIBLEM ZEITGESTEUERTEM ZUGRIFF**
OPERATING METHOD FOR A DATA BUS FOR SEVERAL PARTIES WITH FLEXIBLE, TIMED ACCESS
PROCEDE D'EXPLOITATION POUR UN BUS DE DONNEES DESTINE A PLUSIEURS USAGERS ET A ACCES TEMPORISE FLEXIBLE

(30) Priorität: 04.10.1999 DE 19947657
(43) Veröffentlichungstag der Anmeldung: 03.07.2002
(73) Patentinhaber: Bayerische Motoren Werke Aktiengesellschaft, 80809 München (DE)
(72) Erfinder: PELLER, Martin, D-82256 Fürstenfeldbruck (DE); BERWANGER, Josef, 85586 Poing (DE)
(86) Internationale Anmeldenummer: PCT/EP2000/008788
(87) Internationale Veröffentlichungsnummer: WO 2001/026282

(56) Entgegenhaltungen:
- WO-A-99/46892
- DE-A- 19 720 401
- TEMPLE C: "AVOIDING THE BABBLING-IDIOT FAILURE IN A TIME-TRIGGERED COMMUNICATION SYSTEM" ANNUAL INTERNATIONAL SYMPOSIUM ON FAULT-TOLERANT COMPUTING,US,LOS ALAMITOS, CA: IEEE COMPUTER SOC, 23. Juni 1998 (1998-06-23), Seiten 218-227, XP000804717 ISBN: 0-8186-8471-2

## Beschreibung

Die Erfindung bezieht sich auf ein Betriebsverfahren für einen Datenbus für mehrere Teilnehmer mit flexiblem zeitgesteuertem Zugriff. Ein derartiges Verfahren ist aus der WO 99/46892A bekannt. Bei einem derartigen Datenbus kann in einem Teilnehmer ein Defekt auftreten, so dass dieser Teilnehmer öfter als zugelassen, zu unzulässigen Zeitpunkten oder auch ständig auf dem Bus Daten sendet und damit die Busleitung ganz blockiert und dadurch den Datenverkehr stören bzw. zum Erliegen bringen kann.

Bei Datenbussen, die nach dem TDMA (Time Division Multiplex Access) Verfahren arbeiten, wie sie im Prinzip aus der US 4866606 A bekannt sind, können sog. Bus- Guardians eingesetzt werden. Diese Vorrichtungen verfügen über eine eigene Taktversorgung und kennen die Start- und Endezeitpunkte des Sendeslots des zu überwachenden Teilnehmers. Dadurch ist es möglich, durch den Bus-Guardian die Sendeleitung des Teilnehmers nur zwischen Start- und Endezeitpunkt des erlaubten Sendeslots freizuschalten und in der restliche Zeit keinen Buszugriff zuzulassen. Bei einem Fehler im Teilnehmer kann sich also die Störung nur innerhalb des Sendeslots des Teilnehmers auf den ganzen Bus auswirken und nicht in der restlichen Zeit. (s. "Specification of the TTP/C Protocol", Specification version 1.0 of 21-Jul- 1999, Document edition 1.0 of 21-Jul-1999, Seite 113 ff.).

Bei Datenbussen mit flexiblem zeitgesteuertem Zugriff ist eine derartige Zugriffssteuerung aufgrund der von der von vorneherein nicht vorhersehbaren Inanspruchnahme des Datenbusses durch die ranghöheren Teilnehmer abhängigen und damit sogar von Zyklus zu Zyklus variierenden tatsächlichen Sendezeit des Telegramms des jeweiligen Teilnehmers nicht anwendbar.

Zwar wird in dem Tagungsbericht des "Annual International Symposium On Fault-Tolerant Computing, US, Los Alamitos, CA: IEEE Computer Soc, 23.Juni 1998, S. 218-227 für einen derartigen Datenbus mit TDMA vorgeschlagen, den jeweiligen Teilnehmer zusätzlich mit einem internen Fehlererkennungsmechanismus auszustatten. Die Entscheidung, ob ein Teilnehmer im Fehlerfall Zugriff auf den Datenbus erhält, hängt dabei von der Qualität des Fehlererkennungsmechanismus ab. Es lässt sich nicht ausschließen, dass ein fehlerhafter Teilnehmer Zugriff erhält, nämlich dann, wenn sein Fehler nicht als solcher erkannt wird.

Der Erfindung liegt die Aufgabe zugrunde, ein Betriebsverfahren der eingangs genannten Art zu schaffen, das auch bei einem Datenbus für mehrere Teilnehmer mit flexiblem zeitgesteuertem Zugriff eine Störung des Datenbusverkehrs durch einen defekten Teilnehmer ausschließt.

Die Lösung dieser Aufgabe besteht in einem Datenbus für mehrere Teilnehmer mit flexiblem zeitgesteuertem Zugriff, der die im Patentanspruch 1 angegebenen Merkmale aufweist.

Die Synchronisation kann beispielsweise mit Hilfe eines Taktgebers vorgenommen werden, der in zeitlich regelmäßigen Abständen einen Synchronisationspuls ausgibt. Ergänzend oder alternativ kann die Synchronisation auch mit Hilfe einer definierten, vorzugsweise der prioritätshöchsten Nachricht erfolgen, die ebenfalls in zeitlich regelmäßigen Abständen ausgegeben wird.

Ein besonderes Merkmal des der Erfindung zugrunde liegenden Datenbusses ist darin zu sehen, daß ein Teilnehmer nur dann Zugriff auf den Datenbus hat, wenn er tatsächlich senden möchte und darf. Möchte er während eines Zyklus kein Telegramm ausgeben, bleibt er als Sender vom Datenbus getrennt. Ein dauernd sendender Teilnehmer besitzt in der Regel keine Sendeberechtigung. Er kann daher überhaupt nicht auf den Datenbus zugreifen. Im Gegensatz zum Bus-Guardian beim TDMA-Bus kann er den Datenbusverkehr dann überhaupt nicht stören.

Wie an sich bekannt, kann das Schaltglied eine von den Teilnehmern unabhängige Zeitsteuerung (Taktung) besitzen. Damit läßt sich der Zeitpunkt für den Beginn und das Ende der Sendeberechtigung des einzelnen Teilnehmers unabhängig berechnen und einen Buszugriff zu einem unzulässigen Zeitpunkt, der durch einen Fehler des Taktgebers, der die Taktung für den Busbetrieb verursacht wäre, ausschließen.

Eine weitere vorteilhafte Ausgestaltung der Erfindung besteht darin, daß das Schaltglied Anpassungsglieder besitzt, durch die die Steuerung der Buszugriffszeit über die eigentliche Sendezeit hinaus variierbar ist. Damit lassen sich beispielsweise bauartspezifische Laufzeitverzögerungen innerhalb des Datenbusses berücksichtigen. Näheres hierzu findet sich in der DE 19810293 A sowie in der nachfolgenden Beschreibung eines Ausführungsbeispiels.

Eine Weiterbildung hierzu besteht darin, daß die Variation der Buszugriffszeit von der Funktion des Teilnehmers abhängt. Auch hierzu findet sich im nachfolgenden Ausführungsbeispiel eine Erläuterung.

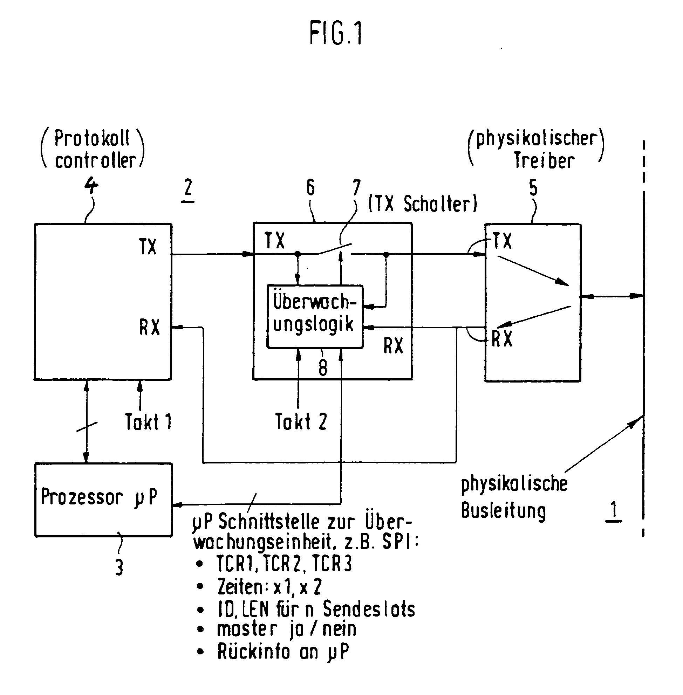

Das in der einzigen Figur dargestellte Schaltbild zeigt schematisch und ausschnittsweise den Aufbau eines erfindungsgemäßen Datenbusses. Der z.B. aus der DE 19720401 A im Prinzip bekannte Datenbus 1 mit flexiblem zeitgesteuertem Zugriff enthält Teilnehmer 2, die im wesentlichen bestehen aus einem Mikroprozessor 3, einem Protokollcontroller 4 und einem Treiber 5. Jeder dieser Teilnehmer 2 verfügt über eine Sendeleitung Tx und eine Empfangsleitung Rx, die an den Datenbus 1 geführt sind. Ein zentraler Taktgeber (nicht dargestellt) bestimmt den Beginn eines Taktzyklus (Takt 1) z. B. durch Ausgabe eines Synchronisationspulses.

Erfindungsgemäß ist ein Schaltglied 6 vorgesehen, das zwischen dem Protokollcontroller und dem Treiber 5 wie gezeigt geschaltet ist. Es ist an der Sende- und Empfangsleitung Tx und Rx angeschlossen und mit dem Mikroprozessor 3 z.B. über eine serielle Schnittstelle direkt verbunden. Das Schaltglied 6 besitzt ferner einen separaten Taktgeber (nicht gezeigt), dessen Taktfrequenz (Takt 2) bei ordnungsgemäßer Funktion zumindest annähernd gleich der des zentralen Taktgebers ist.

Der separate Taktgeber wird auf den zentralen Taktgeber synchronisiert, nachdem der Synchronisierungspuls auf der Tx- oder Rx-Leitung des Datenbusses zum Zyklusbeginn erkannt wird. Ein in einer Überwachungslogik 8 des Schaltglieds 6 vorhandener Slotzähler (nicht dargestellt) wird gestartet. Der Slotzähler entspricht von seinem grundsätzlichen Aufbau dem in einem Protokollcontroller eines derartigen Datenbusses vorhandenen Slotzähler. Der Slotzähler legt den Sendezeitraum (Beginn und Ende der Sendung) für das Aussenden des vom Teilnehmer auszusendenden Telegramms fest. Der Sendezeitraum hängt, wie z.B. in der WO 98/09844 A beschrieben, in seinem Abstand vom Synchronisierungspuls (=Initialisierungszeitpunkt) davon ab, ob und in welchem Umfang prioritätshöhere Teilnehmer gesendet haben.

Hierzu verfügt der Slotzähler über eine Sendeliste für insgesamt n Nachrichten: Diese besteht i.w. aus 2n Speicherzellen, um n erlaubte Sendeslots zu definieren: Pro Sendeslot sind Identifier ID (Rangfolge des Telegramms) und Telegrammlänge LEN zu definieren (je 1 Speicherzelle für ID und LEN). Die Speicherzellen werden z.B. im Rahmen der Datenbus-Initialisierung über die serielle Schnittstelle SPI beschrieben.

Damit der Slotzähler im Schaltglied analog zu den Slotzählern in allen Bus-Teilnehmern funktioniert, werden die Tx- und Rx Leitung des Datenbusses überwacht (da Slotzähler anhalten müssen, wenn ein Telegramm auf den Datenbus gegeben wird). Ferner besitzt der Slotzähler des Schaltglieds Speicherzellen für die Grund-Verzögerungszeitwerte TCR1, TCR2 und TCR3 vorzusehen, die sich aufgrund der Signallaufzeiten im Datenbus für das Senden und Empfangen sowie aufgrund des Zugriffsverfahrens für die Minimalpause zwischen zwei in der Hierarchie benachbarte Telegramme ergibt. Näheres hierzu findet sich in der WO 99/46892 A. TCR1/2/3 ist dort mit t_wx0_tx/t_wx0_rx/t_wx_delta bezeichnet. Diese Zeitwerte sind vom Mikroprozessor 3 aus einstellbar (z.B. über SPI).

Der Slotzähler im Schaltglied 6 läuft synchron zu den Slotzählern aller Bus-Teilnehmer. Wenn dieser Slotzähler einen Wert erreicht, der als ID in der Sendeliste des zugehörigen Teilnehmers gespeichert ist, wird ein in der Tx-Leitung liegender-Schalter 7 geschlossen, damit der Teilnehmer sein Telegramm senden kann. Mit dem Schließen des Schalters beginnt die Zeit TCR3 (oder t_wx_delta = Warteslot) zu laufen. Gleichzeitig wird die Tx-Leitung durch das Schaltglied 6 überwacht. Wenn der Teilnehmer innerhalb seines möglichen Zeitfensters TCR3 für den Sendezeitbeginn ein Sendetelegramm über die Tx-Leitung sendet, so bleibt der Schalter so lange geschlossen, bis die Zeit, die durch die Telegrammlänge LEN des Teilnehmers für dieses Telegramm vorgegeben ist, abgelaufen ist. Wenn innerhalb TCR3 kein Buszugriff erfolgt, d.h. keine Aktivität auf der Sendeleitung Tx, wird nach TCR3 der Schalter 7 wieder geöffnet, da der Teilnehmer kein Telegramm ausgesandt hat.

Eine Zugriffsverletzung des Protokollcontrollers 4 (d.h. Zugriffsversuch zu einem nicht vorgesehenen Zeitpunkt) kann vom Schaltglied 6 aufgrund der dann gegebenen Sendeaktivität auf der vom Protokollcontroller ausgehenden Tx-Leitung erkannt werden und als Information an den Mikroprozessor 3 gemeldet werden, der dann z. B. eine Fehlerbehandlung auf höherer Ebene starten kann, indem beispielsweise der Protokollcontroller deaktiviert wird.

Jeder Fehler eines Teilnehmers kann sich nur bei einem Buszugriff des Teilnehmers auf den Datenbus auswirken, weil nur während dieser Zeitdauer der Schalter 7 geschlossen ist. Wenn die Arbeitsweise des Schaltglieds 6 so gewählt ist, daß der Schalter 7 nur geschlossen wird, wenn tatsächlich eine berechtigte Sendeanforderung vorliegt, d.h. ein Sendebetrieb nur zum richtigen Zeitpunkt nach vorausgehender Sendepause erfolgt, lassen sich auch Störsender vollständig ausschalten, die ein Dauersignal abgeben

Wenn der Teilnehmer Busmaster oder Ersatz-Master ist, wird der Schalter 7 auch von t-x1 bis t+x2 geschlossen. Dabei bedeutet t den idealen Synchronisierungszeitpunkt, der aufgrund der möglichen Quarzungenauigkeiten tatsächlich um x1 bzw. x2 gegenüber dem Idealzeitpunkt vor- oder nachverschoben sein kann. Die Zeitdauern x1 und x2 können ebenfalls in der Überwachungslogik 8 gespeichert sein.

Mit Hilfe des Schaltglieds 6 ist es möglich, auch bei Datenbussen für mehrere Teilnehmer mit flexiblen zeitgesteuertem Zugriff bei Verwendung einer Bus-Topologie ein "Fail Silence" Verhalten der Teilnehmer zu garantieren.

## Patentansprüche

1. Betriebsverfahren für einen Datenbus für mehrere Teilnehmer mit flexiblem zeitgesteuertem Zugriff, mit folgenden Merkmalen:
die Teilnehmer (2) werden synchronisiert,
die Bus-Telegramme werden mit einer hierarchischen Sendefolge von den Teilnehmern und zumindest teilweise nur bedarfsweise ausgesandt, **so dass der Zugriff des jeweiligen** Teilnehmers von der von vorneherein nicht vorhersehbaren Inanspruchnahme des Datenbusses durch die ranghöheren Teilnehmer abhängig ist, **gekennzeichnet dadurch, dass**
zwischen den Teilnehmern (2) und dem Datenbus (1) sich ein Schaltglied (6) befindet, das den Buszugriff für den jeweiligen Teilnehmer (2) nur dann und solange freigibt, wie der Teilnehmer (2) senden darf, wobei das Schaltglied (6) einen Schalter (7) enthält, der nur geschlossen wird, wenn tatsächlich eine berechtigte Sendeanforderung des Teilnehmers vorliegt.

2. Betriebsverfahren nach Anspruch1, **dadurch gekennzeichnet, daß** das Schaltglied (6) eine von den Teilnehmern unabhängige Zeitsteuerung (Takt 2) besitzt.

3. Betriebsverfahren nach Anspruch 1 oder 2, **dadurch gekennzeichnet, daß** das Schaltglied (6) Anpassungsglieder (8) besitzt, durch die die Steuerung der Buszugriffszeit variierbar ist.

4. Betriebsverfahren nach Anspruch 3, **dadurch gekennzeichnet, daß** die Variation der Buszugriffszeit von der Funktion des Teilnehmers abhängt.

## Claims

1. A method of operating a data bus for a number of users or nodes and with flexible time-controlled access and having the following features:
the users (2) are synchronised,
the bus messages are transmitted in a hierarchical sequence by the users and only on demand, at least in some cases, so that access by a particular user depends on the unpredictable claims on the data bus previously made by higher-rank users, **characterised in that** a switching element is disposed between the users (2) and the data bus (1) and gives access to the user (2) only when and as long as the user (2) is permitted to transmit, wherein the switching element (6) contains a switch (7) which is closed only when an authorised request to transmit is actually received from the user.

2. A method according to claim 1, **characterised in that** the switching element (6) comprises a time control means (clock 2) independent of the user.

3. A method according to claim 1 or 2, **characterised in that** the switching element (6) has adapters (8) for varying the control of the bus access time.

4. A method according to claim 3, **characterised in that** the variation of the bus access time depends on the operation of the node or user.

## Revendications

1. Procédé de gestion d'un bus de données à plusieurs utilisateurs à accès synchronisé flexible, ayant les caractéristiques suivantes :
les utilisateurs (2) sont synchronisés,
les télégrammes du bus sont envoyés avec un ordre d'émission hiérarchique par les utilisateurs et, du moins en partie, uniquement en fonction des besoins, de sorte que l'accès de l'utilisateur concerné dépend de l'utilisation, non prévisible a priori, du bus de données par les utilisateurs de rang supérieur,
**caractérisé en ce que**
entre les utilisateurs (2) et le bus de données (1), un organe de commutation (6) autorise l'accès au bus pour l'utilisateur (2) concerné uniquement et aussi longtemps que l'utilisateur (2) est autorisé à émettre, l'organe de commutation (6) renfermant un commutateur (7) qui n'est fermé que lorsqu'il y a réellement une demande d'émission justifiée de l'utilisateur.

2. Procédé de gestion selon la revendication 1,
**caractérisé en ce que**
l'organe de commutation (6) possède une synchronisation (cycle 2) indépendante des utilisateurs.

3. Procédé de gestion selon la revendication 1 ou la revendication 2,
**caractérisé en ce que**
l'organe de commutation (6) possède des organes d'adaptation (8) grâce auxquels la commande du temps d'accès au bus peut varier.

4. Procédé de gestion selon la revendication 3,
**caractérisé en ce que**
la variation du temps d'accès au bus dépend de la fonction de l'utilisateur.
